# EUROPEAN PATENT SPECIFICATION

(11) **EP 4 307 464 B1**
(45) Date of publication and mention of the grant of the patent: **29.04.2026**
(21) Application number: 22767405.8
(22) Date of filing: 03.03.2022
(51) Int. Cl.: H01M 10/04, H01M 10/0587, H01M 50/571, H01M 50/107, H01M 50/124, H01M 50/119, H01M 50/121, H01M 50/128, H01M 50/133, H01M 50/14, H01M 50/141, H01M 50/145

(54) **METHOD FOR MANUFACTURING CORROSION-PREVENTING LAYER, AND CYLINDRICAL SECONDARY BATTERY**
VERFAHREN ZUR HERSTELLUNG EINER KORROSIONSSCHUTZSCHICHT UND ZYLINDRISCHE SEKUNDÄRBATTERIE
PROCÉDÉ DE FABRICATION D'UNE COUCHE ANTICORROSION, ET BATTERIE SECONDAIRE CYLINDRIQUE

(30) Priority: 08.03.2021 KR 20210030319
(43) Date of publication of application: 17.01.2024
(73) Proprietor: LG Energy Solution, Ltd., Seoul 07335 (KR)
(72) Inventor: JUNG, Jimin, Daejeon 34122 (KR); LEE, Je Jun, Daejeon 34122 (KR); KIM, Hak Kyun, Daejeon 34122 (KR)
(74) Representative: Goddar, Heinz J.
(86) International application number: PCT/KR2022/003053
(87) International publication number: WO 2022/191509

(56) References cited:
- JP-A- 2015 170 395
- JP-A- 2015 170 395
- JP-B2- 3 124 021
- JP-B2- 6 107 640
- KR-A- 20100 139 016
- KR-A- 20140 045 816
- KR-B1- 100 193 590
- US-A1- 2016 308 301

## Description

### [Technical Field]

The present invention relates to a manufacturing method of a corrosion prevention layer and a cylindrical secondary battery, and more particularly, to a manufacturing method of a corrosion prevention layer and a cylindrical secondary battery capable of preventing corrosion of a battery can.

### [Background Art]

A conventional cylindrical secondary battery has a structure in which a tab linking a jelly-roll electrode assembly and an external terminal is welded and connected to a foil of the jelly-roll an electrode assembly. The cylindrical secondary battery having such a structure has a problem in that a current path is limited and resistance of the jelly-roll electrode assembly itself is high.

In order to improve this, there is an attempt to decrease the resistance in order to increase the number of tabs, but there is a limit to sufficiently ensure the current path or decrease the resistance to a desired level. In order to resolve such a limit, there is an attempt to decrease resistance in a welding process applied to a battery can.

However, an exterior of the battery can of the cylindrical secondary battery is generally constituted by a metal plated layer, and a welding process of an electrode is a laser welding and a bottom welding can be performed on the exterior of the battery can made of the metal plated layer, and as a result, the metal plated layer constituting the exterior of the battery can be damaged.

When the metal plated layer is damaged as such, a surface is exposed to the air, and as a result, the battery can may be corroded.

In order to solve the above problem, a method for applying a corrosion inhibition liquid to the metal plated layer, and then cleaning the metal plated layer is adopted. However, since a corrosion inhibition liquid component can be easily removed even by the method, the battery can may be easily corroded.

Accordingly, another material or method for efficiently preventing corrosion of the battery can is required by comprehensively solving the problem.

JP 2015-170395 A addresses the problem of how to provide a secondary battery excellent in reliability and capable of preventing corrosion at the bottom of a battery can, even if welding is performed from the outside of the battery can. As solution, it is suggested: In a lithium ion secondary battery having a power generation element formed by winding a positive electrode, a negative electrode and a separator around the axis, a battery can for housing the power generation element, and a connection lead plate for joining the power generation element and battery can, the connection lead plate and battery can are joined via a welding fusion zone. The welding fusion zone is formed to be exposed from a plating layer provided on the surface of the battery can, and covered with a protective layer in a cylindrical secondary battery. Corrosion of the welding fusion zone can be prevented, by covering the welding fusion zone exposed from the plating layer with the protective layer.

US 2016/308301 A1 discloses an anti-corrosive material for crimped terminals. The anti-corrosive material includes: an ultraviolet curable resin including a polymerizable compound as a main component, the polymerizable compound composed of at least one of a photopolymerizable (meth)acrylate monomer and a photopolymerizable (meth)acrylate oligomer. The polymerizable compound is composed of a combination of a monofunctional (meth)acrylate monomer and a bifunctional (meth)acrylate monomer, or a combination of at least one of a monofunctional (meth)acrylate monomer and a bifunctional (meth)acrylate monomer and at least one of a trifunctional (meth)acrylate monomer and a polyfunctional (meth)acrylate monomer having four or more functional groups. The anti-corrosive material has a viscosity at 25°C. of 18900 mPa·s or less measured according to JIS Z8803.

JP 6107640 B2 relates to an active energy ray-curable coating composition (e.g., UV- or electron-beam curable) capable of forming a cured film that strongly adheres to a substrate without swelling or peeling, even after immersion in organic solvents. Designed particularly for metal substrates-including those used as electrode protection materials in lithium-ion batteries-the composition enables formation of robust, solvent-resistant coatings. Notably, the composition contains a fluorescent agent, allowing the presence or absence of the cured coating to be confirmed before or after curing by utilizing fluorescence under active energy irradiation.

### [Disclosure]

### [Technical Problem]

The invention is defined by the subject matter of the independent claims. Advantageous embodiments are subject to the dependent claims.

In order to solve the problem, one object of the present invention is to provide a manufacturing method of a corrosion prevention layer and a cylindrical secondary battery.

However, a problem to be solved by the present invention is not limited to the above-described problem, and other problems not mentioned in the present specification will be able to be clearly appreciated by those skilled in the art from a description of the invention to be described below.

### [Technical Solution]

In order to achieve the object, the present invention provides a manufacturing method of a corrosion prevention layer and a second battery according to the following aspect.

According to one aspect of the present invention, provided is a manufacturing method for providing a corrosion prevention layer on a cylindrical secondary battery including a jelly-roll type electrode assembly having a structure in which a first electrode, a second electrode, and a separator interposed therebetween are wound in one direction based on a winding axis, a battery can accommodating the electrode assembly, and the battery can including a metal plated layer, and a connection lead plate joining the battery can and the electrode assembly, which includes:
(A) applying a resin for the corrosion prevention layer to a portion where the metal plated layer is damaged at a welding portion formed by melting the connection lead plate and the battery can upon welding of an external bottom surface of the battery can; and
(B) forming the corrosion prevention layer by curing the resin for the corrosion prevention layer by ultraviolet rays,

in which the resin for the corrosion prevention layer includes one or more liquid materials,
the one or more liquid materials are ultraviolet curable, and
the one or more liquid materials have a viscosity of 1 cP to 5000 cP (=of 0.001 Pa·s to 5.0 Pa·s);
the resin for the corrosion prevention layer (6) further includes a light emitting material, and
the method further comprises (C) checking an application state of the resin for the corrosion prevention layer on the battery can by ultraviolet rays.

According to a first aspect of the present invention, provided is a cylindrical secondary battery including: a jelly-roll type electrode assembly having a structure in which a first electrode, a second electrode, and a separator interposed therebetween are wound in one direction based on a winding axis;
a battery can accommodating the electrode assembly and including a metal plated layer;
a connection lead plate joining the battery can and the electrode assembly; and
a corrosion prevention layer manufactured by the manufacturing method of a corrosion prevention layer.

According to a second aspect of the present invention, provided is a cylindrical secondary battery comprising: a jelly-roll type electrode assembly having a structure in which a first electrode, a second electrode, and a separator interposed therebetween are wound in one direction based on a winding axis;
a battery can accommodating the electrode assembly and the battery can including a metal plated layer;
a connection lead plate joining the battery can and the electrode assembly; and
a corrosion prevention layer manufactured by a manufacturing method according to the first aspect.

### [Advantageous Effects]

A manufacturing method of a corrosion prevention layer and a cylindrical secondary battery according to one aspect of the present invention prevent corrosion of a battery can due to a damaged portion of a metal plated layer generated by welding on the battery can, thereby preventing a defect of a product.

In the manufacturing method of a corrosion prevention layer according to one aspect of the present invention, since a resin for the corrosion prevention layer is easily cured by ultraviolet rays, a process is convenient. Further, after the resin for the corrosion prevention layer is applied, the metal plated layer which exists on an exterior of the battery can is prevented from being exposed to a corrosion factor such as air, moisture, etc., and as a result, the corrosion of the battery can be prevented and safety of a battery can be enhanced.

A manufacturing method of a corrosion prevention layer and a cylindrical secondary battery according to one aspect of the present invention can provide an advantage in that the cylindrical secondary battery is not transformed under an activation process (in general, neglected for approximately 24 hours under a high-temperature high-humidity condition (a temperature of approximately 65°C or more and a humidity of approximately 90% or more).

However, the effects which can be obtained through the present invention are not limited only to the above-described effects, and other technical effects not mentioned herein will be able to be clearly understood from the description of the invention to be described later by those skilled in the art.

### [Description of Drawings]

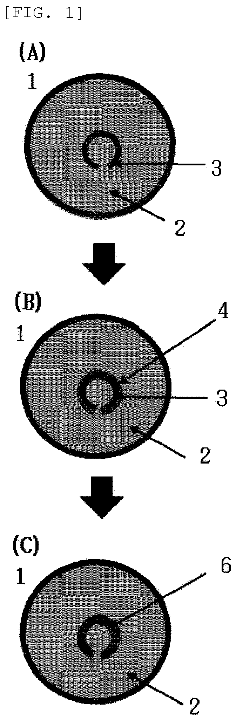

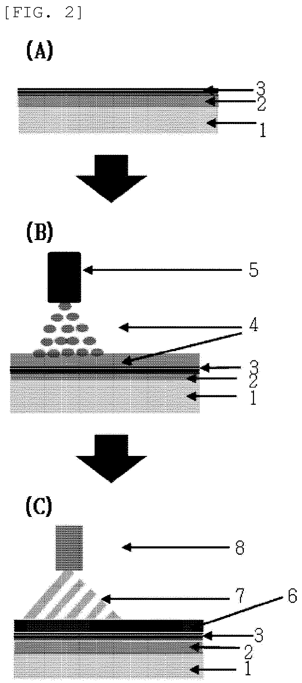

FIGS. 1 and 2 are schematic views illustrating one implementation example of the present invention.

### [Best Mode for the Invention]

The present invention may have various modifications and various embodiments or embodiments and specific embodiments or implementation examples will be illustrated in the drawings and described in detail in the detailed description.

In the present specification, terms including as first, second, A, B, and the like are used for describing various constituent elements, but the constituent elements are not limited by the terms. The terms are used only to discriminate one element from another element. For example, a first component may be referred to as a second component, and similarly, the second component may be referred to as the first component without departing from the scope of the present invention.

In the present specification, a term "and/or" includes a combination of a plurality of related items or some of the plurality of related items.

In the present specification, when a certain component is expressed as a singular number, the certain component may include a plurality of concepts even though it is not separately specified in the present specification.

In the present specification, in respect to terms such as "include", "have", etc., unless separately specified in the present specification, a feature, a number, a step, an operation, a process, a component, a member, etc., or a combination thereof mean an existence itself, and does not mean excluding another feature, another number, etc.

In the present specification, a term 'battery can' may have an opening portion, a cylindrical side portion, and a bottom portion (or bottom surface), and may be generally made of a metallic or alloy material. Preferably, the battery can may be constituted by nickel plated iron (a battery can including a nickel contained metal plated layer and iron).

Further, the 'battery can' is an object accommodating an electrode assembly of a secondary battery. The battery can may be cylindrical, and in respect to a size of the battery can, circular diameter of both end portions may be 30 to 55 mm and a height may be 60 to 120 mm. For example, the circular diameter x the height of the cylindrical battery can may be 40 mm x 60 mm, 40 mm x 80 mm, or 40 mm x 90 mm, or 40 mm x 120 mm.

In the present specification, the term 'secondary battery' refers to a battery which is repeatedly usable for along time through recharging. The secondary battery may be categorized into a nickel-cadmium secondary battery, a lithium ion secondary battery, etc., according to an electrode active material.

In the present specification, the term 'cylindrical secondary battery' refers to a secondary battery having a cylinder shape or a type similar thereto. The cylindrical secondary battery which is generally used for large-capacity electronic and electric devices due to a characteristic in which energy density per volume is high may be used in a form in which a plurality of cylindrical secondary batteries are combined to constitute a battery pack. For example, the cylindrical secondary battery may have a structure in which a rivet penetrated and inserted into a bottom portion opposite to the opening portion is used as a cathode and a battery can itself is used as an anode.

In the present specification, a term 'first electrode' is a cathode and a term 'second electrode' is an anode, but vice versa.

In the present specification, the term 'cathode' includes a cathode current collector and a cathode active material applied onto at least one surface of the cathode current collector. An example of the cathode current collector may be aluminum or alloy, but is not limited thereto. An example of the cathode active material may be a lithium contained transition metal oxide, but is not limited thereto.

In the present specification, the term 'anode' includes an anode current collector and an anode active material applied onto at least one surface of the anode current collector. An example of the anode current collector may be copper or alloy, but is not limited thereto. An example of the anode active material may be a carbon material, but is not limited thereto.

In the present specification, a term 'separator' as a film interposed between the cathode and the anode serves to facilitate movement of ions required for breaking a circuit while separating the cathode and the anode. An example of the separator may be a fine porous film constituted by a polyolefin based film, but is not limited thereto.

In the present specification, a term 'liquid material' means a material which maintains a liquid state at room temperature (approximately 25°C).

In the present specification, a term 'ultraviolet curability' means a property of being cured by ultraviolet rays, and for example, when any material is 'ultraviolet curable', the case refers to any material being hardened and cured by the ultraviolet rays.

In the present specification, a term 'metal plated layer' means a layer applied onto an external surface of the battery can, and this includes a metal plating material. For example, the metal plated layer may be a nickel plated layer.

In the present specification, a term 'damaged portion' means a region where an exterior (including even the metal plated layer when the metal plated layer is applied) of the battery can is damaged by a welding process. The welding process is generally performed on an exterior of a bottom of the battery can. However, the metal plated layer may be damaged by the welding process. As a result, the metal plated layer is easily exposed to a corrosion environment such as air, moisture, etc., and as a result, an electrolyte may be leaked.

If it is not contrarily defined, all terms used herein including technological or scientific terms have the same meanings as those generally understood by a person with ordinary skill in the art.

Hereinafter, a preferred embodiment of the present invention will be described in detail with reference to the accompanying drawings.

According to one implementation example of the present invention, provided is a manufacturing method for providing a corrosion prevention layer on a cylindrical secondary battery comprising a jelly-roll type electrode assembly having a structure in which a first electrode, a second electrode, and a separator interposed therebetween are wound in one direction based on a winding axis, a battery can accommodating the electrode assembly and the battery can including a metal plated layer, and a connection lead plate joining the battery can and the electrode assembly, which includes:
(A) applying a resin for the corrosion prevention layer to a portion where the metal plated layer is damaged at a welding portion formed by melting the connection lead plate and the battery can upon welding of an external bottom surface of the battery can; and
(B) forming the corrosion prevention layer by curing the resin for the corrosion prevention layer by ultraviolet rays,

in which the resin for the corrosion prevention layer includes one or more liquid materials, and
the one or more liquid materials are ultraviolet curable, and have a viscosity of 1 cP to 5000 cP (=of 0.001 Pa·s to 5.0 Pa·s).

For example, the resin for the corrosion prevention layer may have a viscosity of 1 cP (=0.001 Pa·s) or more, 200 cP (=0.200 Pa·s) or more, 400 cP (=0.400 Pa·s) or more, 600 cP (=0.600 Pa·s) or more, 800 cP or more(=0.800 Pa·s), 1000 cP (=1.000 Pa·s) or more, 1200 cP (=1.200 Pa·s) or more, 1400 cP (=1.400 Pa·s) or more, 1600 cP (=1.600 Pa·s) or more, 1800 cP (=1.800 Pa·s) or more, 2000 cP (=2.000 Pa·s) or more, 2200 cP (=2.300 Pa·s) or more, or 2400 cP (=2.400 Pa·s) or more.

Further, the resin for the corrosion prevention layer may have a viscosity of 5000 cP (=5.000 Pa·s) or less, 4800 cP (=4.800 Pa·s) or less, 4600 cP (=4.600 Pa·s) or less, 4400 cP (=4.400 Pa·s) or less, 4200 cP (=4.200 Pa·s) or less, 4000 cP (=4.000 Pa·s) or less, 3800 cP (=3.800 Pa·s) or less, 3600 cP (=3.600 Pa·s) or less, 3400 cP (=3.400 Pa·s) or less, 3200 cP (=3.200 Pa·s) or less, 3000 cP (=3.000 Pa·s) or less, 2800 cP (=2.800 Pa·s) or less, or 2600 cP (=2.600 Pa·s) or less.

In regard to the implementation example, referring to FIG. 1 and/or FIG. 2, it is illustrated that a resin for the corrosion prevention layer 4 is cured by ultraviolet rays 7 to form a corrosion prevention layer 6.

In regard to the implementation example, referring to FIG. 2(B), the resin for the corrosion prevention layer 4 is sprayed and applied onto the battery can 1, and referring to FIG. 2(C), a process of forming a form in which the resin for the corrosion prevention layer 4 is cured, i.e., the corrosion prevention layer 6 by irradiating the ultraviolet rays 7 is illustrated. A spray method depends on a general method.

The resin for the corrosion prevention layer used in the implementation example interrupts a corrosion factor such as air or moisture contact with the damaged portion of the battery can to prevent the corrosion. As the resin for the corrosion prevention layer, a resin for the corrosion prevention layer is used, which is characterized to have ultraviolet curability and low viscosity. The corrosion prevention layer made of the resin may be formed to have a uniform thickness, and may prevent air bubbles which are generated on the corrosion prevention layer and provide an excellent physical property in terms of heat resistance, thermal conductivity, etc. Further, the corrosion prevention layer made of the resin for the corrosion prevention layer is not transformed by the activation process (in general, neglected for approximately 24 hours under the high-temperature high-humidity condition (the temperature of approximately 65°C or more and the humidity of approximately 90% or more)).

An application method of the resin for the corrosion prevention layer may be performed by an appropriate method in this technical field. The spraying may be performed through equipment such as a nozzle 5, and a discharge amount and a discharge pressure applied to the nozzle may be selected as appropriate ranges in the technical field. The irradiation of the ultraviolet rays 7 may be performed by equipment such as a UV lamp 8, and a wavelength of light applied to a light source of the UV lamp may be selected as an appropriate range in the technical field.

Since the manufacturing method of the corrosion prevention layer according to the implementation example uses one or more ultraviolet curable liquid materials in the resin for the corrosion prevention layer , the manufacturing method provides convenience of the process. Further, since one or more liquid materials having a low viscosity of 1 cP (=0.001 Pa·s) to 5000 cP (=5.000 Pa·s) are used, the corrosion prevention layer made of the resin for the corrosion prevention layer may be formed to have a uniform thickness, and may prevent air bubbles which are generated on the corrosion prevention layer and provide an excellent physical property in terms of heat resistance, thermal conductivity, etc. Further, the corrosion prevention layer formed by the manufacturing method by interrupts a corrosion factor such as air or moisture contact with the metal plated layer to prevent the corrosion of the battery can. Further, the corrosion prevention layer made of the resin for the corrosion prevention layer according to the implementation example is not transformed by the subsequent activation process (in general, neglected for approximately 24 hours under the high-temperature high-humidity condition (the temperature of approximately 65°C or more and the humidity of approximately 90% or more)).

In particular, it is possible to resolve a problem in that a coating layer formed by a conventional inkjet printing method is taken off and the corrosion occurs.

According to the embodiments of the present invention, the resin for the corrosion prevention layer further includes a light emitting material and which further includes
(C) checking an application state of the resin for the corrosion prevention layer on the battery can by the ultraviolet rays.

In the manufacturing method according to the present invention, corrosion prevention may be more efficiently achieved by checking the application state of the resin for the corrosion prevention layer on a portion where an external surface of the battery can is damaged with the light emitting material in the resin for the corrosion prevention layer.

As necessary, when a pressure is raised due to gas which exists inside the cylindrical secondary battery, a cleavage valve may be provided in the battery can in order to discharge internal gas to the outside. In this case, a step of forming the corrosion prevention layer by avoiding the cleavage valve may be further included.

In an additional implementation example, provided is the manufacturing method of the corrosion prevention layer, in which the resin for the corrosion prevention layer includes at least one selected from an epoxy based, an acrylate-based, a silicon-based, and a urethane-acrylate-based resins.

In regard to the implementation example, referring to FIG. 2(B), the resin for the corrosion prevention layer 4 including at least one selected from the an epoxy based, an acrylate-based, a silicon-based, and a urethane-acrylate-based resins is sprayed and applied onto the battery can 1, and referring to FIG. 2(C), a process of forming a form in which the resin for the corrosion prevention layer 4 is cured, i.e., the corrosion prevention layer 6 by irradiating the ultraviolet rays 7 is illustrated.

In the manufacturing method of the corrosion prevention layer according to the implementation example, since the resin for the corrosion prevention layer includes at least one selected from the epoxy based, acrylate-based, silicon-based, and urethane-acrylate-based resins having ultraviolet curability and low viscosity characteristics, the process may be convenient upon forming the corrosion prevention layer and a thickness of the corrosion prevention layer may be formed to be uniform, and air bubbles generated on the corrosion prevention layer may be prevented and the excellent physical property may be provided in terms of the heat resistance, the thermal conductivity, etc.

According to an additional implementation example of the present invention, provided is the manufacturing method of the corrosion prevention layer in which a curing time in step (B) is 5 seconds or more and 30 seconds or less.

Preferably, the curing time may be 5 second or more, 10 seconds or more, or 15 seconds or more.

Preferably, the curing time may be 30 seconds or less, 25 seconds or less, or 20 seconds or less.

In regard to the implementation example, referring to FIG. 2(B), the resin for the corrosion prevention layer 4 is sprayed and applied onto the battery can 1. Further, referring to FIG. 2(C), a process is illustrated, in which the resin for the corrosion prevention layer 4 is cured by irradiating the ultraviolet rays 7 for 5 seconds or more and 30 seconds or less to form a corrosion prevention layer 6.

In the manufacturing method of the corrosion prevention layer according to the implementation example, due to a curing time of a short-term of 5 seconds or more and 30 seconds or less, quickness of the process may be provided and a secondary battery satisfying the range may secure the safety.

According to an additional implementation example, provided is the manufacturing method of the corrosion prevention layer in which the battery can includes iron.

According to an additional implementation example, provided is the manufacturing method of the corrosion prevention layer in which the metal plated layer includes nickel.

The manufacturing method according to the implementation examples may primarily prevent the corrosion of the battery can by providing the metal plated layer (or including the nickel). However, when the bottom surface of the battery can is welded from the outside, the surface of the battery can may be exposed while the metal plated layer is also melted. However, in the case of the implementation example, after the battery can including the metal plated layer is welded, the corrosion prevention layer is disposed at the damaged portion by the welding to prevent the surface of the battery can from being exposed.

According to an additional implementation example, provided is the manufacturing method of the corrosion prevention layer in which the thickness of the corrosion prevention layer is more than 1 µm and less than 10 µm.

Preferably, the thickness of the corrosion prevention layer may be more than 1 µm, more than 2 µm, more than 3 µm, more than 4 µm, or more than 5 µm.

Preferably, the thickness of the corrosion prevention layer may be less than 10 µm, less than 9 µm, less than 8 µm, less than 7 µm, or less than 6 µm.

When a range of the thickness according to the implementation example is satisfied, optimization for a cell size range of the secondary battery is enabled.

According to an additional implementation example, provided is the corrosion prevention layer manufactured according to the manufacturing method of any one of the implementation examples.

In regard to the implementation example, referring to FIG. 1 or 2, the corrosion prevention layer 6 is formed by curing the resin for the corrosion prevention layer provided to a welding portion 3 positioned on the metal plated layer 2 applied to the battery can 1 by the ultraviolet rays 7.

The corrosion prevention layer according to the implementation example interrupts a corrosion factor such as air or moisture contact with the metal plated layer to prevent the corrosion of the battery can. Since the resin for the corrosion prevention layer uses one or more liquid materials having the ultraviolet curability and the low viscosity, the corrosion prevention layer formed by using the liquid material may have the uniform thickness, have an air bubble which is not almost generated, and have the excellent physical property in terms of the heat resistance, the thermal conductivity, etc. Further, the corrosion prevention layer is not transformed by the activation process (in general, neglected for approximately 24 hours under the high-temperature high-humidity condition (the temperature of approximately 65°C or more and the humidity of approximately 90% or more)).

Further, the corrosion prevention layer may also resolve the problem in that the coating layer formed by the conventional inkjet printing method is taken off and the corrosion occurs.

According to one implementation example of the present invention, provided is a cylindrical secondary battery comprising a jelly-roll type electrode assembly having a structure in which a first electrode, a second electrode, and a separator interposed therebetween are wound in one direction based on a winding axis;
a battery can accommodating the electrode assembly and the battery can including a metal plated layer;
a connection lead plate joining the battery can and the electrode assembly; and
a corrosion prevention layer manufactured by any one of the manufacturing methods of the corrosion prevention layer.

Alternatively, according to one implementation example of the present invention, provided is a cylindrical secondary battery including: a jelly-roll type electrode assembly having a structure in which a first electrode, a second electrode, and a separator interposed therebetween are wound in one direction based on a winding axis;
a battery can accommodating the electrode assembly and the battery can including a metal plated layer;
a connection lead plate joining the battery can and the electrode assembly; and
a corrosion prevention layer disposed at a portion where an external surface of the battery can damaged at a welding portion formed by melting the connection lead plate of an external bottom surface of the battery can, and the battery can.

In regard to the implementation examples, referring to FIG. 1(C) or FIG. 2(C), an electrode assembly (not illustrated) having a structure in which the first electrode, the separator, and the second electrode are sequentially stacked and wound, and the corrosion prevention layer 6 positioned on the welding portion 3 positioned on the metal plated layer 2 applied to the external bottom surface 1 of the battery can are illustrated.

The secondary battery according to the implementation example includes a corrosion prevention layer that prevents the corrosion of the battery can by interrupting a corrosion factor such as air or moisture contact with the metal plated layer, and includes a corrosion prevention layer having a uniform thickness, and having an air bubble which is not almost generated and provides an excellent physical property in terms of heat resistance, thermal conductivity, etc. Further, the secondary battery includes a corrosion prevention layer which is not transformed by the activation process (in general, neglected for approximately 24 hours under the high-temperature high-humidity condition (the temperature of approximately 65°C or more and the humidity of approximately 90% or more)). Accordingly, the cylindrical secondary battery including the corrosion prevention layer has stability and/or safety. Further, when the cylindrical secondary battery includes the corrosion prevention layer, a defective rate of the cylindrical secondary battery may be minimized.

As necessary, when a pressure is raised due to gas which exists inside the cylindrical secondary battery, a cleavage valve may be provided in the battery can in order to discharge internal gas to the outside. In this case, the corrosion prevention layer may be formed by avoiding the cleavage valve.

According to an additional implementation example, provided is the cylindrical secondary battery in which the corrosion prevention layer includes a resin for the corrosion prevention layer, and
the resin for the corrosion prevention layer is at least one selected from epoxy-based, acrylate-based, silicon-based, and urethane-acrylate-based resins.

In regard to the implementation example, referring to FIG. 2 (B) , it is illustrated that a resin for the corrosion prevention layer 4 including at least one selected from the epoxy-based, acrylate-based, silicon-based, and urethane-acrylate-based resins is sprayed and applied to the battery can 1.

In the cylindrical secondary battery according to the implementation example, since the resin for the corrosion prevention layer includes at least one selected from the epoxy based, acrylate-based, silicon based, and urethane-acrylate-based resins having ultraviolet curability and low viscosity characteristics, the process may be convenient upon forming the corrosion prevention layer and a thickness of the corrosion prevention layer may be formed to be uniform, and air bubbles generated on the corrosion prevention layer may be prevented and the excellent physical property may be provided in terms of the heat resistance, the thermal conductivity, etc.

According to an additional implementation example, provided is the cylindrical secondary battery in which the resin for the corrosion prevention layer further includes a light emitting material.

In the cylindrical secondary battery according to the implementation example, corrosion prevention may be more efficiently achieved by checking the application state of the resin for the corrosion prevention layer on a portion where an external surface of the battery can is damaged with the light emitting material in the resin for the corrosion prevention layer .

According to an additional implementation example, provided is cylindrical secondary battery in which the battery can includes iron.

According to an additional implementation example, provided is cylindrical secondary battery in which the metal plated layer includes nickel.

The cylindrical secondary battery according to the implementation examples may primarily prevent the corrosion of the battery can including the iron by providing the metal plated layer (or including the nickel). However, when the bottom surface of the battery can is welded from the outside, the surface of the battery can may be exposed while the metal plated layer is also melted. However, in the case of the implementation example, after the battery can including the metal plated layer is welded, the corrosion prevention layer is disposed at the damaged portion by the welding to prevent the surface of the battery can from being exposed.

According to an additional implementation example, provided is the cylindrical secondary battery in which the thickness of the corrosion prevention layer is more than 1 µm and less than 10 µm.

Preferably, the thickness of the corrosion prevention layer may be more than 1 µm, more than 2 µm, more than 3 µm, more than 4 µm, or more than 5 µm.

Preferably, the thickness of the corrosion prevention layer may be less than 10 µm, less than 9 µm, less than 8 µm, less than 7 µm, or less than 6 µm.

When a range of the thickness according to the implementation example is satisfied, optimization for a cell size range of the secondary battery is enabled.

Although the preferred implementation example of the present invention are described through the above description, but the present invention is not limited thereto and various modifications can be made within the scope of the appended claims.

### [Explanation of Reference Numerals and Symbols]

- 1:: Battery can
- 2:: Metal plated layer
- 3:: Welding portion
- 4:: Resin for the corrosion prevention layer
- 5:: Nozzle
- 6:: Corrosion prevention layer
- 7:: Ultraviolet rays
- 8:: UV lamp

## Claims

1. A manufacturing method for providing a corrosion prevention layer (6) on a cylindrical secondary battery including a jelly-roll type electrode assembly having a structure in which a first electrode, a second electrode, and a separator interposed therebetween are wound in one direction based on a winding axis, a battery can (1) accommodating the electrode assembly, and the battery can (1) including a metal plated layer (2), and a connection lead plate joining the battery can (1) and the electrode assembly, the method comprising:
(A) applying a resin (4) for the corrosion prevention layer (6) to a portion where the metal plated layer (2) is damaged at a welding portion (3) formed by melting the connection lead plate and the battery can (1) upon welding of an external bottom surface of the battery can (1); and
(B) forming the corrosion prevention layer (6) by curing the resin (4) for the corrosion prevention layer (6) by ultraviolet rays,
wherein the resin (4) for the corrosion prevention layer (6) includes one or more liquid ultraviolet curable materials having a viscosity of 0.001 Pa·s to 5.0 Pa·s.
wherein the resin (4) for the corrosion prevention layer (6) further includes a light emitting material, and
wherein the method further comprises (C) checking an application state of the resin (4) for the corrosion prevention layer (6) on the battery can (1) by ultraviolet rays.

2. The manufacturing method of claim 1, wherein the resin (4) for the corrosion prevention layer (6) is at least one selected from epoxy-based, acrylate-based, silicon-based, and urethane-acrylate-based resins.

3. The manufacturing method of claim 1 or 2, wherein a curing time in step (B) is 5 seconds or more and 30 seconds or less.

4. The manufacturing method of one of claims 1 to 3, wherein the battery can (1) includes iron.

5. The manufacturing method of one of claims 1 to 4, wherein the metal plated layer (2) includes nickel.

6. The manufacturing method of one of claims 1 to 5, wherein a thickness of the corrosion prevention layer (6) is more than 1 µm and less than 10 µm.

7. A cylindrical secondary battery comprising:
a jelly-roll type electrode assembly having a structure in which a first electrode, a second electrode, and a separator interposed therebetween are wound in one direction based on a winding axis;
a battery can (1) accommodating the electrode assembly and including a metal plated layer (2);
a connection lead plate joining the battery can (1) and the electrode assembly; and
a corrosion prevention layer (6) manufactured by a manufacturing method of a corrosion prevention layer (6) of any one of claims 1 to 6.

8. The cylindrical secondary battery of claim 7, wherein the corrosion prevention layer (6) includes a resin (4) for the corrosion prevention layer (6), and
the resin (4) for the corrosion prevention layer (6) is at least one selected from an epoxy-based, an acrylate-based, a silicon-based, and a urethane-acrylate-based resins.

9. The cylindrical secondary battery of claim 7 or 8, wherein the battery can (1) includes iron.

10. The cylindrical secondary battery of one of claims 7 to 9, wherein the metal plated layer (2) includes nickel.

11. The cylindrical secondary battery of one of claims 7 to 10, wherein a thickness of the corrosion prevention layer (6) is more than 1 µm and less than 10 µm.

## Patentansprüche

1. Herstellungsverfahren zum Bereitstellen einer Korrosionsschutzschicht (6) auf einer zylindrischen Sekundärbatterie, die eine Elektrodenanordnung vom Jelly-Roll-Typ, die eine Struktur aufweist, in der eine erste Elektrode, eine zweite Elektrode und ein dazwischen angeordneter Separator in einer Richtung basierend auf einer Wickelachse gewickelt sind, eine Batteriedose (1), die die Elektrodenanordnung aufnimmt, und die Batteriedose (1), die eine metallplattierte Schicht (2) enthält, und eine Verbindungsleitungsplatte, die die Batteriedose (1) und die Elektrodenanordnung verbindet, enthält, wobei das Verfahren umfasst:
(A) Aufbringen eines Harzes (4) für die Korrosionsschutzschicht (6) auf einen Abschnitt, in dem die metallplattierte Schicht (2) beschädigt ist, an einem Schweißabschnitt (3), der durch Schmelzen der Verbindungsleitungsplatte und der Batteriedose (1) beim Schweißen einer äußeren Bodenfläche der Batteriedose (1) gebildet wird; und
(B) Bilden der Korrosionsschutzschicht (6) durch Härten des Harzes (4) für die Korrosionsschutzschicht (6) durch Ultraviolettstrahlen,
wobei das Harz (4) für die Korrosionsschutzschicht (6) ein oder mehrere flüssige ultravioletthärtbare Materialien mit einer Viskosität von 0,001 Pa·s bis 5,0 Pa·s enthält,
wobei das Harz (4) für die Korrosionsschutzschicht (6) ferner ein lichtemittierendes Material enthält, und
wobei das Verfahren ferner (C) Prüfen eines Aufbringungszustands des Harzes (4) für die Korrosionsschutzschicht (6) auf der Batteriedose (1) durch Ultraviolettstrahlen umfasst.

2. Herstellungsverfahren nach Anspruch 1, wobei das Harz (4) für die Korrosionsschutzschicht (6) mindestens eines ist, das aus Harzen auf Epoxidbasis, Acrylatbasis, Siliciumbasis und Urethanacrylatbasis ausgewählt ist.

3. Herstellungsverfahren nach Anspruch 1 oder 2, wobei eine Härtungszeit in Schritt (B) 5 Sekunden oder mehr und 30 Sekunden oder weniger beträgt.

4. Herstellungsverfahren nach einem der Ansprüche 1 bis 3, wobei die Batteriedose (1) Eisen enthält.

5. Herstellungsverfahren nach einem der Ansprüche 1 bis 4, wobei die metallplattierte Schicht (2) Nickel enthält.

6. Herstellungsverfahren nach einem der Ansprüche 1 bis 5, wobei eine Dicke der Korrosionsschutzschicht (6) mehr als 1 µm und weniger als 10 µm beträgt.

7. Zylindrische Sekundärbatterie, die umfasst:
eine Elektrodenanordnung vom Jelly-Roll-Typ, die eine Struktur aufweist, in der eine erste Elektrode, eine zweite Elektrode und ein dazwischen angeordneter Separator in einer Richtung basierend auf einer Wickelachse gewickelt sind;
eine Batteriedose (1), die die Elektrodenanordnung aufnimmt und eine metallplattierte Schicht (2) enthält;
eine Verbindungsleitungsplatte, die die Batteriedose (1) und die Elektrodenanordnung verbindet; und
eine Korrosionsschutzschicht (6), die durch ein Herstellungsverfahren einer Korrosionsschutzschicht (6) nach einem der Ansprüche 1 bis 6 hergestellt ist.

8. Zylindrische Sekundärbatterie nach Anspruch 7, wobei die Korrosionsschutzschicht (6) ein Harz (4) für die Korrosionsschutzschicht (6) enthält, und
das Harz (4) für die Korrosionsschutzschicht (6) mindestens eines ist, das aus Harzen auf Epoxidbasis, Acrylatbasis, Siliciumbasis und Urethanacrylatbasis ausgewählt ist.

9. Zylindrische Sekundärbatterie nach Anspruch 7 oder 8, wobei die Batteriedose (1) Eisen enthält.

10. Zylindrische Sekundärbatterie nach einem der Ansprüche 7 bis 9, wobei die metallplattierte Schicht (2) Nickel enthält.

11. Zylindrische Sekundärbatterie nach einem der Ansprüche 7 bis 10, wobei eine Dicke der Korrosionsschutzschicht (6) mehr als 1 µm und weniger als 10 µm beträgt.

## Revendications

1. Procédé de fabrication pour l'agencement d'une couche de protection anticorrosion (6) sur une batterie secondaire cylindrique comprenant un ensemble d'électrode du type enroulé doté d'une structure dans laquelle une première électrode, une deuxième électrode, et un séparateur intercalé entre elles, sont enroulés dans une direction basée sur un axe d'enroulement, un boîtier de batterie (1) contenant l'ensemble d'électrode, et le boîtier de batterie (1) comprenant une couche métallisée (2), et une plaque conductrice de connexion joignant le boîtier de batterie (1) et l'ensemble d'électrode, le procédé comprenant :
(A) l'application d'une résine (4) pour la couche de protection anticorrosion (6) sur une partie dans laquelle la couche métallisée (2) est endommagée dans une partie de soudure (3) réalisée par la fusion de la plaque conductrice de connexion et du boîtier de batterie (1) lors du soudage d'une surface inférieure externe du boîtier de batterie (1) ; et
(B) la formation de la couche de protection anticorrosion (6) en durcissant la résine (4) pour la couche de protection anticorrosion (6) par des rayons ultraviolets, la résine (4) pour la couche de protection anticorrosion (6) comprenant une ou plusieurs matières liquides durcissables aux UV avec une viscosité allant de 0,001 Pa·s à 5.0 Pa,s,
la résine (4) pour la couche de protection anticorrosion (6) comprenant en outre un matériau électroluminescent, et
le procédé comprenant en outre (C) le contrôle d'un état d'application de la résine (4) pour la couche de protection anticorrosion (6) sur le boîtier de batterie (1) par des rayons ultraviolets.

2. Procédé de fabrication selon la revendication 1, la résine (4) pour la couche de protection anticorrosion (6) étant au moins une sélectionnée parmi des résines à base d'époxy, à base d'acrylate, à base de silicium, et à base d'acrylate d'uréthane.

3. Procédé de fabrication selon la revendication 1 ou 2, un temps de durcissement à l'étape (B) étant 5 secondes ou davantage et 30 secondes ou moins.

4. Procédé de fabrication selon une des revendications 1 à 3, le boîtier de batterie (1) comprenant du fer.

5. Procédé de fabrication selon une des revendications 1 à 4, la couche métallisée (2) comprenant du nickel.

6. Procédé de fabrication selon une des revendications 1 à 5, une épaisseur de la couche de protection anticorrosion (6) mesurant plus de 1 µm et moins de 10 µm.

7. Batterie secondaire cylindrique comprenant :
un ensemble d'électrode du type enroulé possédant une structure dans laquelle une première électrode, une deuxième électrode, et un séparateur intercalé entre elles, sont enroulés dans une direction basée sur un axe d'enroulement ;
un boîtier de batterie (1) contenant l'ensemble d'électrode, et comprenant une couche métallisée (2) ;
une plaque conductrice de connexion joignant le boîtier de batterie (1) et l'ensemble d'électrode ; et
une couche de protection anticorrosion (6) fabriquée avec un procédé de fabrication d'une couche de protection anticorrosion (6) selon une quelconque des revendications 1 à 6.

8. Batterie secondaire cylindrique selon la revendication 7, la couche de protection anticorrosion (6) comprenant une résine (4) pour la couche de protection anticorrosion (6), et
la résine (4) pour la couche de protection anticorrosion (6) étant au moins une sélectionnée parmi des résines à base d'époxy, à base d'acrylate, à base de silicium, et à base d'acrylate d'uréthane.

9. Batterie secondaire cylindrique selon la revendication 7 ou 8, le boîtier de batterie (1) comprenant du fer.

10. Batterie secondaire cylindrique selon une des revendications 7 à 9, la couche métallisée (2) comprenant du nickel.

11. Batterie secondaire cylindrique selon une des revendications 7 à 10, une épaisseur de la couche de protection anticorrosion (6) mesurant plus de 1 µm et moins de 10 µm.
